# EUROPÄISCHE PATENTANMELDUNG

(11) **EP 2 103 275 A1**
(43) Veröffentlichungstag der Anmeldung: **23.09.2009**
(21) Anmeldenummer: 08102739.3
(22) Anmeldetag: 19.03.2008
(51) Int. Cl.: A61C 8/00, A61C 13/275

(54) **Zahnbrücke**

(71) Anmelder: Cerim AG, 8280 Kreuzlingen (CH)
(72) Erfinder: Häfliger, Balz, 8280, Kreuzlingen (CH)
(74) Vertreter: Muri, Peter

(57) **Zusammenfassung**

Die Erfindung bezieht sich auf eine Zahnbrücke zur Aufnahme und zum Implantieren von einem oder mehreren Zähnen, bestehend im Wesentlichen aus Pfeilern, Ankern oder Implantaten sowie einem Brückenglied, das zu Aufnahme des Zahns oder der Zähne vorgesehen ist.

Erfindungsgemäss ist vorgesehen, die Zahnbrücke (1) aus einem Trägerelement (2) und einem Brückenglied (3) herzustellen. Das Brückenglied (3) ist mit Pfeilern, Implantatschrauben (4) oder Ankern in einen Kiefer eines Patienten entweder als schwebende Brücke oder als Basisbrücke implantierbar, wohingegen das erfindungsgemässe Trägerelement (2) auf das Brückenglied (3) aufsetzbar und mit diesem vorzugsweise verschraubbar ist.

## Beschreibung

### Technisches Gebiet

Die Erfindung bezieht sich auf eine Zahnbrücke zur Aufnahme und zum Implantieren von mehreren Zähnen, bestehend im Wesentlichen aus Pfeilern, Ankern oder Implantaten sowie einem Trägerelement, das zur Aufnahme der Zähne vorgesehen ist.

### Stand der Technik

Zahnbrücken sind dafür geeignet, Zahnlücken zu schliessen. Zahnlücken sollten deshalb unverzüglich geschlossen werden, da fehlende Zähne die Kaufunktion stören und Probleme beim Sprechen verursachen. Die weitere Gefahr besteht darin, dass insbesondere die umgebenen Zähne sich verschieben können, was wiederum zu Kieferschmerzen und auch zu erheblichen Zahnfleischproblemen führen kann.

Im Gegensatz zu den aus dem Stand der Technik bekannten Prothesen sind Zahnbrücken, so genannte fest sitzende Zahnersatzlösungen. Zahnbrücken überbrücken eine Zahnlücke von einem oder mehreren Zähnen. Die Zahnbrücke selbst besteht aus Pfeilern, Ankern und den Brückengliedern an sich. Die Pfeiler selbst können Implantate wie beispielsweise Schrauben oder auch einzementierbare Implantate sein. Sie dienen dazu, den Zahn oder die Prothetik im Abstand zum Zahnfleisch zu halten. Anker dienen dazu, die freien Enden der Zahnbrücken an bestehenden Zähnen oder auch an den Pfeilern zu befestigen. Die Brückenglieder selbst dienen dazu, die künstlichen Zähne, die die Zahnlücke schliessen sollen, entsprechend aufzunehmen, wobei die freien Enden der Brückenglieder dann mit den Ankern verbunden werden.

Eine Zahnbrücke kann sowohl festsitzend als auch abnehmbar ausgestaltet sein. Sie hat die grundsätzliche Aufgabe, fehlende Zähne zu ersetzen. Je nach Anzahl der zu ersetzenden Zähne spricht man von einer einspannigen oder beziehungsweise mehrspannigen Brücke.

Grundsätzlich unterscheidet man zwischen eine Basisbrücke und einer Schwebebrücke, wobei erstere sich im Mund kaum von den normalen Zähnen unterscheiden lässt. Eine solche Basisbrücke sitzt unmittelbar direkt auf dem Zahnfleisch des Kiefernknochens auf. Eine Schwebebrücke schwebt auf so genannten Pfeilern über dem Zahnfleisch. Somit hat der Patient die Möglichkeit, bei der Verwendung einer Schwebebrücke das Brückenglied unmittelbar mit einer Interdentalbürste oder Zahnseide zu reinigen, da das Brückenglied nicht unmittelbar direkt auf dem Zahnfleisch aufliegt.

Eine Teleskopbrücke kann ausschliesslich vom Zahnarzt entfernt und wieder eingesetzt werden. Sie wird mit so genannten Teleskopkronen gehalten.

Es gibt verschiedene Arten von Zahnbrücken. Man unterscheidet sie je nach Ausführung, Befestigung oder dem verwendeten Material. Es gibt Zahnbrücken aus Metall (Gold- und Metalllegierungen) und aus Keramik. Am häufigsten sind jedoch Zahnbrücken vertreten, deren tragenden Teile aus Metalllegierung gefertigt sind, deren sichtbarer Bereich aber aus zahnfarbener Keramik besteht.

### Nachteile des Standes der Technik

Jede Art von Zahnersatz, sei es Zahnbrücke, Zahnkrone oder Implantat ist in der Regel eine Einzelanfertigung für den Patienten, die in Bezug auf Aufwand und Preis stark variieren können. Im Vorhinein ist es kaum möglich, eine Aussage über den Aufwand und somit die Kosten zu machen, da der genaue Zustand der Zähne, des Zahnfleisches und daher der Aufwand nicht bekannt sind.

Zahnbrücken können auch nur dort überall eingesetzt werden, sofern noch genügend intakte eigene Zähne vorhanden sind oder aber Pfeiler vorhanden sind, die implantiert sind. Die Pfeiler haben die entscheidende Aufgabe, alle die auf die Zahnbrücke einwirkenden Kräfte aufnehmen zu müssen.

In der Regel werden die Zahnbrücken ausschliesslich an ihren freien Enden mit den Pfeilern befestigt. Daher ist es in der Regel nicht möglich, sie in einem einzigen Stück, insbesondere im vorderen sichtbaren Bereich als Zahnbrücke auszugestalten.

### Aufgabe der Erfindung

Aufgabe der Erfindung ist es, eine Zahnbrücke der vorstehenden Art derart weiterzubilden, dass zumindest eine der genannten Nachteile des Standes der Technik vermieden wird.

### Lösung der Aufgabe

Der Grundgedanke der Lösung der Aufgabe ist es, eine Zahnbrücke zweiteilig auszubilden. Der eine Teil, insbesondere der erfindungsgemässe Teil ist als Trägerelement ausgebildet, das als Grundelement auf den Kiefernknochen aufgesetzt und mit diesem fest verbunden ist. Der weitere Teil der Zahnbrücke, als Brückenglied ausgebildet, wird auf das Trägerelement aufgesetzt und mit diesem verbunden.

Damit ist die Lösung der Aufgabe, die Zahnbrücke aus einem Trägerelement und aus einem Brückenelement auszubilden, wobei das Trägerelement mit Implantaten, wie beispielsweise Pfeilern oder Implantatschrauben implantierbar ist und das Brückenglied auf dem Trägerelement befestigbar ist.

### Vorteile der Erfindung

Eine der wesentlichen Vorteile der Erfindung besteht darin, dass nahezu unabhängig von der Ausgestaltung des erwachsenen Kiefers nur eine geringe Anzahl von Trägerelementen hergestellt und bevorratet werden muss, um eine Passgenauigkeit zu gewährleisten. Auf einfache und bekannte Art und Weise wird das Trägerelement am Kieferknochen implantiert und mit diesem befestigt. Bevorzugtes Ziel ist es, diese Befestigung derart auszubilden, dass eine Unterspülung des Trägerelementes möglich ist. Dies bedeutet, dass zwischen dem Knochen beziehungsweise dem Zahnfleisch und dem Trägerelement ein Spalt verbleibt, durch den entsprechende Flüssigkeiten fliessen können. Dadurch ist auch mit Reinigungsbürsten eine einfache Säuberung gegeben.

Insbesondere bei älteren Personen, bei denen keine natürlichen Pfeiler, wie beispielsweise Backenzähne mit ausreichender Festigkeit mehr vorhanden sind, ist die Ausbildung des erfindungsgemässen Trägerelements von erheblichem Vorteil. Der weitere erhebliche Vorteil des Trägerelements ist darin zu sehen, dass dieses auf sehr einfache Art und Weise mit möglichst wenigen Implantatschrauben befestigt werden kann. Es muss ausschliesslich darauf geachtet werden, dass das Trägerelement angepasst auf dem Kiefernknochen aufsitzt und die freien Enden des Trägerelements aufgrund ihrer Abschrägung sich dann entsprechend den Verlauf des Kiefers anpassen. Somit ist keine Verankerung des Trägerelements mit bereits bestehenden Zähnen oder weiteren Eckankern notwendig.

Der weitere erfindungswesentliche Gedanke besteht darin, dass der weitere Teil der Zahnbrücke, ausgebildet als Brückenglied, mit dem Trägerelement verbunden wird. Das Brückenglied besteht in der Draufsicht aus derselben geometrischen Ausbildung wie das Trägerelement und ist so gesehen auf das Trägerelement aufzusetzen. Zwischen Trägerelement und Brückenglied ist eine Passgenauigkeit vorgesehen, sodass eine lagegerechte Ausrichtung der Zähne, die auf dem Brückenglied angeordnet sind, jederzeit gegeben ist. Dadurch ergibt sich einer der Vorteile der Erfindung, dass sich die beim Kau- und Beissvorgang entstehenden Kräfte direkt auf das Brückenglied und die Pfeiler auswirken und nicht auf die Zähne.

Der wesentliche Vorteil des Brückenglieds liegt somit darin, dass der Zahntechniker bereits zuvor auf dem Brückenglied die Zähne entsprechend modellieren und auch das Zahnfleisch bereits entsprechend modellartig anpassen kann, sodass nur nach einer sehr kurzen Implantierungszeit der Patient bereits über ein vollständiges Gebiss verfügen kann und damit die herkömmliche Funktion eines Zahngebisses wieder gegeben ist. Durch diese erfindungsgemässe Ausführung wird das Brückenglied durch das Trägerelement vollständig abgedeckt, so dass das künstliche Zahnfleisch das Brückenglied "unsichtbar" gestaltet. Dies wird dadurch erreicht, dass das künstliche Zahnfleisch am Trägerelement das Brückenglied überlappt.

Die Befestigung des Brückenglieds an dem Trägerelement ist durch kleine Mikroschrauben vorgesehen, um ein nichtgewolltes Anheben des Brückenglieds bei extrem hohen Kräften zu vermeiden. Die Mikroschrauben sind vorzugsweise horizontal angeordnet und werden in das Trägerelement eingeschraubt. Dies bringt auch den Vorteil mit sich, dass zum Entfernen des Trägerelements die künstlichen Zähne nicht beschädigt werden.

In der Regel ist es notwendig, drei Grössen des Trägerelements beziehungsweise des Brückenglieds zu bevorraten, da diese drei Grössen den grössten Teil des Bedarfes, insbesondere bei Personen höheren Alters, abdecken.

Damit ist der Zahnarzt in der Lage, jederzeit auf das erfindungsgemässe System dieser Zahnbrücke zurückzugreifen. Es erlaubt ihm, auf sehr schnelle Art und Weise mittels bevorrateter Zahnbrücken, zumindest für den Patienten ein Provisorium zu schaffen, das wiederum die Möglichkeit bereitstellt, die ursprüngliche Beissfunktion wieder herzustellen. Durch eine baldmöglichste Anpassung der Zahnfarbe der Zähne, der Zahnformen und auch des Zahnfleisches ist dann ein einfacher Wechsel des Brückengliedes durch Lösen von zwei Mikroschrauben möglich, sodass der Patient in einer weiteren sehr kurzen Sitzung dann sein natürliches Aussehen erhält.

Die verwendeten Mikroschrauben, die eine lösbare Verbindung zwischen dem Trägerelement und dem Brückenglied herstellen, sind ebenfalls aus dem Stand der Technik bekannt.

Ein weiterer wesentlicher Vorteil der erfindungsgemässen Zahnbrücke ist es, dass es sehr kostengünstig herstellbar ist. Es besteht im Wesentlichen aus zwei Bauelementen, nämlich dem Trägerelement und dem Brückenglied. Das Trägerelement kann mit herkömmlichen bereits aus dem Stand der Technik bekannten Implantatschrauben im Kieferknochen verankert werden.

Die Struktur und Geometrie der Zahnbrücke selbst ist bereits vorgegeben und muss aufgrund der physikalischen Geometrie des Kiefers nur in geringer Variantenbreite bevorratet werden. Für die Montage des Brückengliedes ist vorzugsweise eine Bohrlehre vorgesehen, die nahezu dem Brückenglied entspricht. So können die Bohrungen in den Kieferknochen gesetzt werden, wobei währenddessen ständig geprüft werden kann, ob das Brückenglied auf dem Kieferknochen exakt aufliegt und die Enden unmittelbar an den verbliebenen Zähnen enden.

Weitere vorteilhafte Ausgestaltungen gehen aus der nachfolgenden Beschreibung, den Zeichnungen sowie den Ansprüchen hervor.

### Zeichnungen

Es zeigen
- Fig. 1: eine Explosionszeichnung in perspektivischer Ansicht auf die erfindungsgemässe Zahnbrücke zusammen mit Implantatschrauben;
- Fig. 2: eine weitere Ansicht auf die explosionsartige Darstellung gemäss Fig. 1;
- Fig. 3A bis 3C: unterschiedliche Seitenansichten auf das erfindungsgemässe Brückenglied der Zahnbrücke gemäss Fig. 1;
- Fig. 4A bis 4C: unterschiedliche Ansichten auf das erfindungsgemässe Trägerelement gemäss Fig. 1;
- Fig. 5: einen Schnitt durch die Zahnbrücke gemäss Fig. 1, jedoch im montierten Zustand;
- Fig. 6: einen Schnitt durch ein weiteres Ausführungsbeispiel der erfindungsgemässen Zahnbrücke.

### Kurze Beschreibung der Abbildungen der Zeichnungen

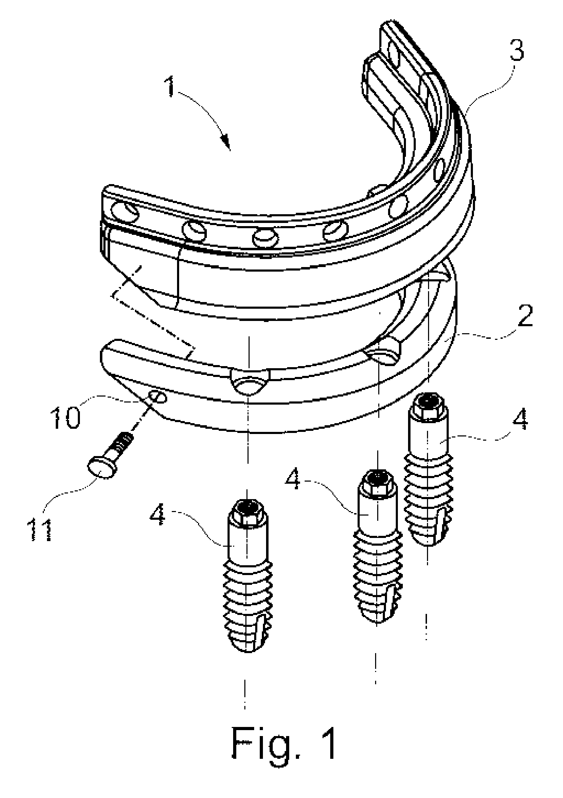

In Fig. 1 ist die erfindungsgemässe Zahnbrücke 1 dargestellt. Sie besteht im Wesentlichen aus dem Brückenglied 2 und dem auf das Brückenglied 2 aufsetzbare Trägerelement 3.

Die Befestigung des Brückenglieds 2 im Knochen erfolgt mit Befestigungsmitteln 4, beispielsweise Implantatschrauben.

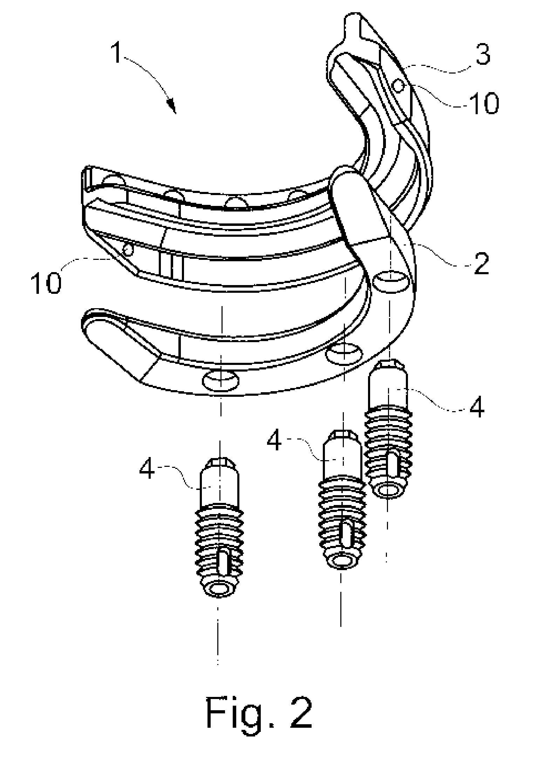

Auch in Fig. 2 ist die erfindungsgemässe Zahnbrücke 1 dargestellt. Auch hier sind die entsprechenden Bauteile, nämlich das Brückenglied 2 sowie das Trägerelement 3 als auch die Befestigungsmittel 4 zu erkennen.

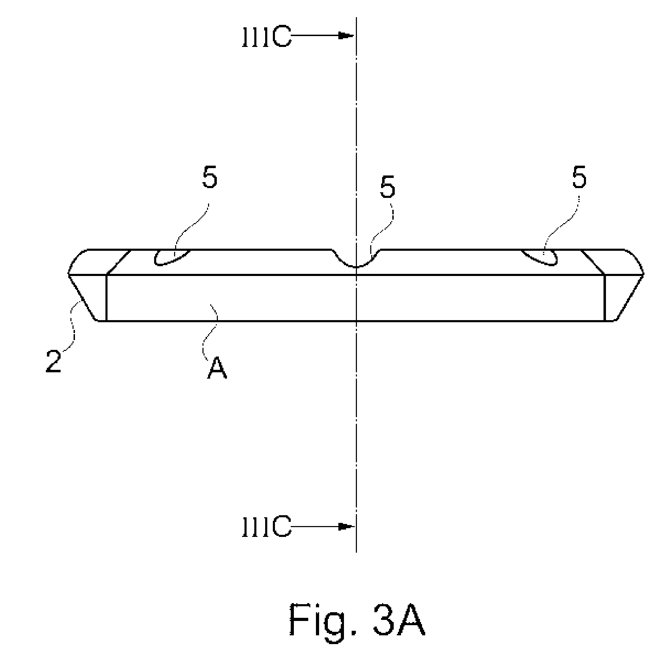

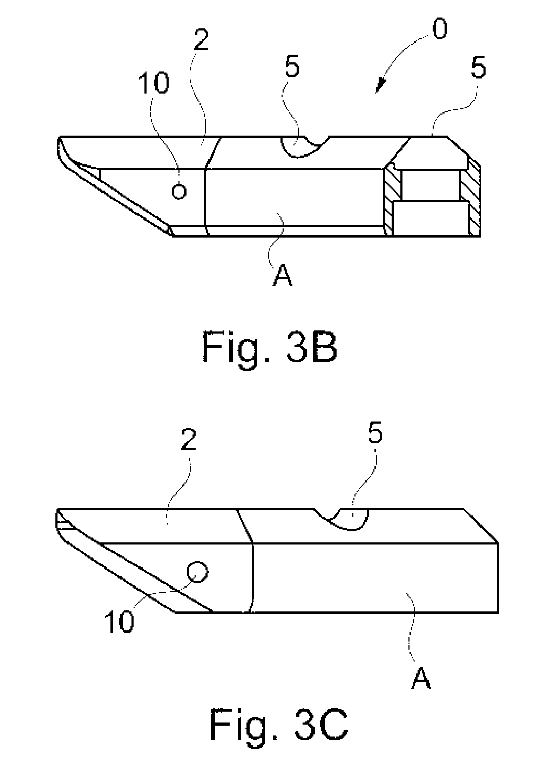

Fig. 3A bis Fig. 3C zeigen eine Seitenansicht auf das erfindungsgemässe Brückenglied 2 gemäss Fig. 1. Es besteht aus einem der Kieferform angepassten halbovalen Element, das zu seinen Enden hin, so wie in Fig. 3B und Fig. 3C gezeigt, leicht abgeschrägt ist. Damit ist eine Anpassung an die nachfolgenden Zähne gegeben. Bohrungen 5 sind vorgesehen, um die in Fig. 1 und Fig. 2 dargestellten Befestigungsmittel 4 aufzunehmen und um eine lösbare Verbindung mit diesem herzustellen. Die Anordnung der Bohrungen 5 stellt ausschliesslich ein Beispiel dar und ist nicht auf diese Ausführungsform beschränkt. Die Bohrung 5 bei dem hier dargestellten Ausführungsbeispiel ist derart ausgestaltet, dass das Befestigungsmittel 4 auf der Oberseite O des Brückenglieds 2 bedienbar ist und eine Verriegelung zwischen Befestigungsmittel 4 und Brückenglied 2 hergestellt werden kann.

Die Aussenkontur A des Brückenglieds 2 ist derart gestaltet, dass dieses ein Trägerelement 3 aufnehmen kann. Die Aufnahme ist derart vorgesehen, dass das Trägerelement 3 auf der Oberseite O des Brückenglieds 2 aufgesetzt wird, nachdem die Verriegelung der Befestigungsmittel 4 mit dem Brückenglied 2 vollzogen worden sind.

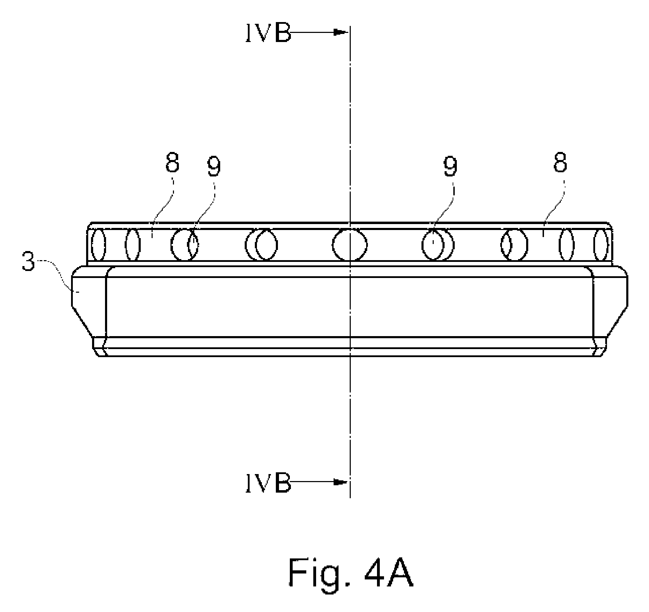

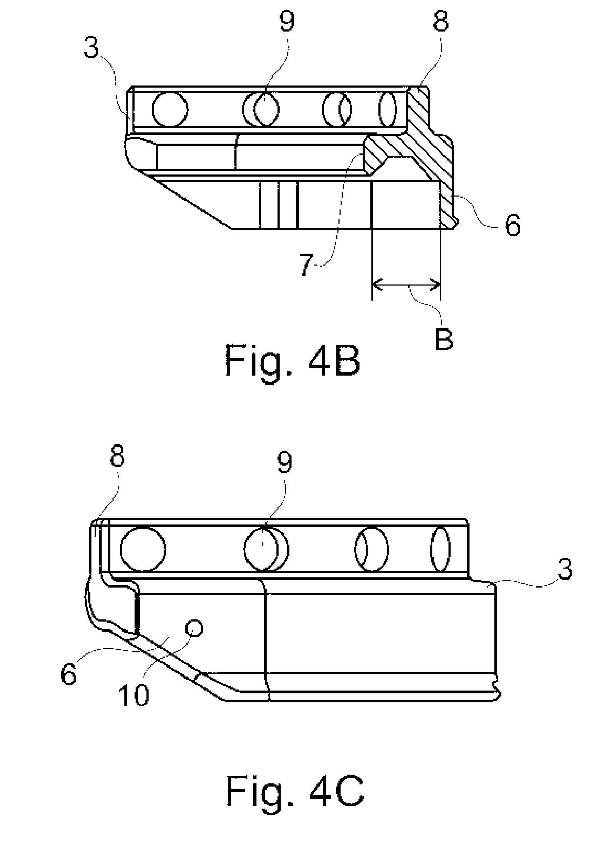

In seiner Breite B ist das Trägerelement 3, insbesondere dargestellt in Fig. 4A bis Fig. 4C, derart bemessen, dass es das Brückenglied 2 aufnehmen kann. Das Trägerelement 3 kann derart ausgebildet sein, dass es Schenkel 6 und 7 aufweist und diese das Brückenglied 2 zwischen sich einschliessen.

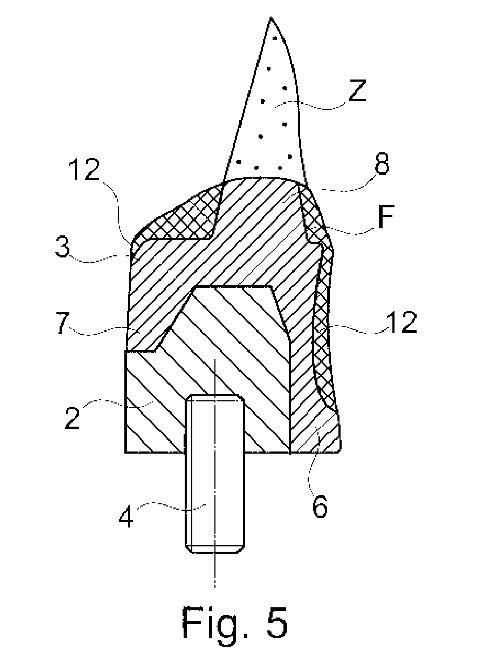

Alternativ, so wie auch in Fig. 4A bis Fig. 4C sowie Fig. 5 dargestellt, kann das Brückenglied 3 einen langen Schenkel 6 sowie einen kurzen Schenkel 7 aufweisen (Fig. 4B und Fig. 5), damit ein einfacheres Anpassen und Montieren des Brückenglieds 3 an dem Brückenglied 2 bei bereits angeordneten Zähnen Z möglich ist.

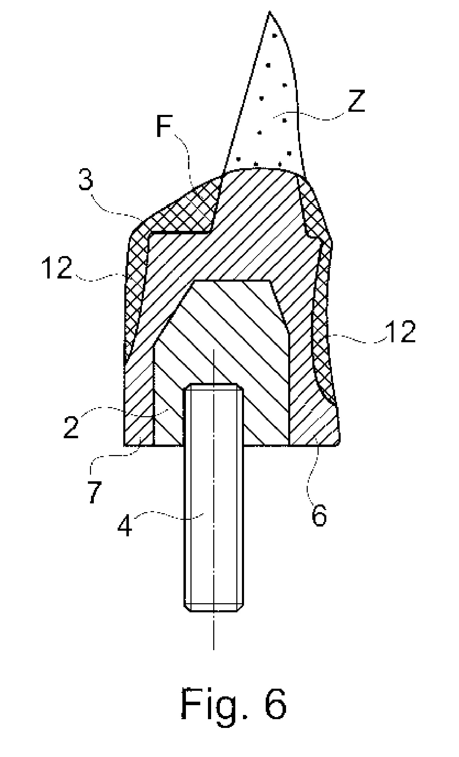

Eine weitere Alternative sieht vor, dass die Schenkel 6 und 7 gleich lang sind (Fig. 6).

Das Trägerelement 3 kennzeichnet sich dadurch, dass es ein oder mehrere Zähne Z (Fig. 5 und 6) aufnehmen kann. Ein Aufnahmeelement 8, das vorzugsweise unterschiedliche Bohrungen oder Ausnehmungen 9 aufweist, dient dazu, die zu ersetzenden Zähne entsprechender Anzahl aufzunehmen, sowie Modelliermasse die das Zahnfleisch F ausbildet ebenfalls aufzunehmen. Die Ausnehmung 9 erstreckt sich genau zur Längserstreckung des Aufnahmeelements 8. Sie dienen in der Regel dazu, plastische Masse, die das Zahnfleisch F darstellen soll, durchdringend aufzunehmen. Dadurch wird ein besserer Halt gewährleistet. Hierzu ist vorzugsweise vorgesehen, die Oberflächenstruktur des Trägerelements 3 entsprechend zu gestalten, sodass eine Haftung auf sehr einfache Art und Weise möglich ist.

Bei einem bevorzugten Ausführungsbeispiel sind die Oberflächen der Schenkel 6 und 7, die jeweils nach aussen weisen, derart ausgebildet, dass sie eine Hohlkehle 12 (Fig. 5 und 6) aufweisen, so dass ausreichend Modelliermasse hierin Platz findet, die das Zahnfleisch F (das nicht Bestandteil dieser Erfindung ist) darstellen soll. Somit überdeckt das modellierte Zahnfleisch F des Trägerelements 3 das Brückenglied 2 bis zum eigentlichen Zahnfleisch hin, so dass die Zahnbrücke 1 als Prothese zumindest nicht unmittelbar erkennbar ist. Der Zahn Z (der nicht Bestandteil dieser Erfindung ist) erweckt den Anschein, als wäre er von natürlichem Zahnfleisch umgeben.

Eine besondere Ausführungsform sieht vor, dass das Brückenglied 2 Bohrungen 10 aufweist, die zur Aufnahme einer Klemmschraube 11 vorgesehen sind. Diese Klemmschraube 11 wird in ein in der Bohrung 10 im Brückenglied 2 vorgesehenen Gewinde eingeschraubt und klemmt mit dem Trägerelement 3 oder dringt in eine weitere Bohrung im Trägerelement 3 ein. Mittels eines Verriegelungsmechanismus oder eines Klebstoffs wird ein ungewolltes Lösen der Klemmschraube 11 verhindert.

Für die Montage ist vorgesehen, das Brückenglied 2 als Bohrlehre zu verwenden. Dadurch ist es möglich, ständig zu kontrolliren, ob das Brückenglied 2 auch tatsächlich die gewünschte Ausrichtung einnimmt. Sind die Bohrungen in den Kieferknochen erfolgt, erfolgt das Setzen der Befestigungsmittel 4. Anschliessend wird das Brückenglied 2 aufgesetzt und mit den Befestigungsmitteln 4 verriegelt. Nun kann abschliessend das bereits vorbereitete Trägerelement 3 auf das Brückenglied 2 aufgesetzt werden. Sofern eine Herstellung einer festen Zahnbrücke 1 gewünscht ist, erfolgt die Verschraubung über die bereits zuvor beschriebene Klemmschraube 11. Diese Schritte können alle in einer Sitzung bei einem Zahnarzt oder Kieferorthopäden vollzogen werden.

Damit ist eine Zahnbrücke geschaffen worden, die im Wesentlichen aus zwei Grundelementen, nämlich einem Trägerelement 3 und einem Brückenglied 2 besteht, die miteinander verbindbar sind, wobei das Brückenglied 2 vorzugsweise auf Pfeilern mit dem Kieferknochen verankert ist und das Trägerelement 3 mit den Zähnen Z auf das Brückenglied 2 aufgesetzt wird.

### Bezugszeichenliste

- 1: Zahnbrücke
- 2: Trägerelement
- 3: Brückenglied
- 4: Befestigungsmittel
- 5: Bohrungen
- 6: langer Schenkel
- 7: kurzer Schenkel
- 8: Aufnahmeelement
- 9: Ausnehmungen
- 10: Bohrung
- 11: Klemmschraube
- 12: Hohlkehle
- B: Breite

- Z: Zähne
- F: Zahnfleisch
- A: Aussenkontur

## Patentansprüche

1. Zahnbrücke zur Aufnahme und zum Implantieren von einem oder mehreren Zähnen, bestehend im Wesentlichen aus einem Trägerelement, das zur Aufnahme des Zahns oder der Zähne vorgesehen ist sowie Befestigungsmitteln in der Ausbildung von Pfeilern, Ankern oder Implantaten, **dadurch gekennzeichnet, dass** die Zahnbrücke (1) aus einem Trägerelement (3) und einem Brückenglied (2) besteht, wobei das Brückenglied (2) mit Befestigungsmitteln (4) in einen Kiefer eines Patienten entweder als schwebendes Glied oder als Basisglied implantierbar, und wobei das Trägerelement (3) auf das Brückenglied (2) aufsetzbar ist.

2. Zahnbrücke nach Anspruch 1, **dadurch gekennzeichnet, dass** das Brückenglied (2) ein oder mehrere Bohrungen (5) aufweist, die zur Aufnahme der Befestigungsmittel (4) dienen.

3. Zahnbrücke nach Anspruch 1 oder 2, **dadurch gekennzeichnet, dass** das Trägerelement (3) aus einem Aufnahmeelement (8) zur Aufnahme von Zähnen (Z) sowie an das Aufnahmeelement (8) anschliessende Schenken (6, 7) bestehend aus einem längeren Schenkel (6) und einem kürzeren Schenkel (7) besteht.

4. Zahnbrücke nach mindestens einem der vorgehenden Ansprüche, **dadurch gekennzeichnet, dass** das Trägerelement (3) auf dem Brückenelement (2) lösbar fixierbar ist.

5. Zahnbrücke nach Anspruch 4, **dadurch gekennzeichnet, dass** die Verbindung durch eine Klemmschraube (11) herstellbar ist.

6. Zahnbrücke nach Anspruch 3, **dadurch gekennzeichnet, dass** das Aufnahmeelement (8) Ausnehmungen (9) aufweist, die quer zur Längserstreckung des Aufnahmeelements (8) sich erstrecken.
